# EUROPÄISCHE PATENTSCHRIFT

(11) **EP 2 574 035 B1**
(45) Veröffentlichungstag und Bekanntmachung des Hinweises auf die Patenterteilung: **08.01.2014**
(21) Anmeldenummer: 11182548.5
(22) Anmeldetag: 23.09.2011
(51) Int. Cl.: H04N 5/225

(54) **Justagevorrichtung**
Adjustment device
Dispositif d'ajustement

(43) Veröffentlichungstag der Anmeldung: 27.03.2013
(73) Patentinhaber: Sick AG, 79183 Waldkirch (DE)
(72) Erfinder: Gebauer, Jens, 79312 Emmendingen (DE)
(74) Vertreter: Ludewigt, Christoph

(56) Entgegenhaltungen:
- EP-A1- 2 472 851
- DE-A1- 10 342 526
- DE-A1-102004 063 844

## Beschreibung

Die vorliegende Erfindung betrifft eine Justagevorrichtung für einen optoelektronischen Sensor, beispielsweise eine Kamera, insbesondere eine Stereokamera.

Aus der WO 2008/089836 A1 ist eine Kameraeinheit zum Überwachen eines Raumbereichs bekannt. Diese besitzt einen elektronischen Bildsensor, der auf einem Bauteilträger angeordnet ist, sowie ein Objektiv mit einem Objektivkörper. Der Objektivkörper und der Bauteilträger sind über ein erstes Koppelstück zu einer integrierten Baueinheit verbunden. Gemäß einem Aspekt der Erfindung besitzt das erste Koppelstück in der integrierten Baueinheit zumindest eine begrenzte erste Beweglichkeit relativ zu dem Objektivkörper und zumindest eine begrenzte zweite Beweglichkeit relativ zu dem Bauteilträger. Die integrierte Baueinheit besitzt zumindest einen ersten und einen zweiten lösbaren Spannmechanismus, um das erste Koppelstück, den Objektivträger und den Bauteilträger relativ zueinander zu fixieren. Eine solche Kameraeinheit lässt sich vorteilhaft als bildgebender Sensor zum Absichern einer automatisiert arbeitenden Maschine verwenden.

Aus der DE 36 22 843 A1 ist eine Bildaufnahmevorrichtung auf Halbleiterbasis bekannt. Die Bildaufnahmevorrichtung auf Halbleiterbasis enthält ein Gehäuse, das auf einem Okularabschnitt angeordnet ist sowie einen Bildsensor auf Halbleiterbasis, der in dem Gehäuse untergebracht ist und dessen Bildsensorfläche gegenüber dem optischen System des Okularabschnittes liegt. Der Sensor ist an einer Platte befestigt, die von einem Justierteil getragen wird, so dass sie in einer Richtung parallel zur Sensoroberfläche beweglich ist. Die Platte wird durch das Drehen von Zentrierschrauben bewegt, so dass der Mittelpunkt der Sensoroberfläche in Übereinstimmung mit der Achse des optischen Systems gebracht werden kann. Ein Fokussierteil zur Bewegung entlang der optischen Achse befindet sich ebenfalls in dem Gehäuse. Das Justierteil wird von dem Gehäuse und dem Fokussierteil so getragen, dass sie zusammen entlang der optischen Achse sowie um den Schnittpunkt der Sensoroberfläche mit der optischen Achse beweglich sind. Das Justierteil kann durch Kippschrauben zur Justage des Kippwinkels der Sensoroberfläche relativ zur optischen Achse bewegt werden.

An eine Kamera werden bezüglich Positionierung und Orientierung der lichtformenden und lichtempfindlichen Bauteile hohe Anforderungen gestellt. Die Kamera besteht dabei vereinfacht aus den Komponenten Objektiv und Bildsensor. Für eine einwandfreie Funktion der optischen Baugruppe ist es erforderlich, dass das Objektiv zu dem Bildsensor eine bestimmte sehr genau einzuhaltende geometrische Position und Orientierung hat.

Die Aufgabe besteht darin, eine Justagevorrichtung für einen optoelektronischen Sensor, insbesondere eine Kamera oder eine Stereokamera bereitzustellen, die beliebig oft justierbar ist. Eine weitere Aufgabe besteht darin, eine Justierung in möglichst vielen Freiheitsgraden zu ermöglichen. Eine weitere Aufgabe besteht darin, eine optische Achse einer Kamera, insbesondere einer Stereokamera einzustellen. Eine weitere Aufgabe besteht darin, bei einer Stereokamera die optischen Achsen unabhängig voneinander einzustellen.

Die Aufgabe wird gelöst durch eine Justagevorrichtung für einen optoelektronischen Sensor mit einem Bildsensor mit einem geometrischen Oberflächenmittelpunkt und einem Objektiv, wobei der Bildsensor in einer optischen Achse des Objektivs angeordnet ist, so dass eine Objektabbildung des Objektivs auf dem Bildsensor erfasst wird, wobei ein Objektivaufnahmekörper vorgesehen ist, an dem das Objektiv befestigt ist und der Objektivaufnahmekörper gegenüber einem Bildsensoraufnahmekörper, an dem ein den Bildsensor haltender Bildsensorhalter befestigt ist, senkrecht zur optischen Achse des Objektivs verschiebbar und fixierbar gelagert ist und wobei das Objektiv in Richtung der optischen Achse positionierbar und fixierbar gelagert ist, wobei der Bildsensorhalter um den Oberflächenmittelpunkt in einem Radius verschwenkbar und fixierbar an dem Bildsensoraufnahmekörper gelagert ist.

Durch die Erfindung ist es möglich, zwischen dem Objektiv und dem Bildsensor geometrisch einen nahezu idealen Zustand einzustellen. Der geometrisch ideale Zustand wird wie folgt definiert:
- Die optische Achse des Objektivs schneidet den Bildsensor exakt im geometrischen Oberflächenmittelpunkt des Bildsensors.
- Die optische Achse des Objektivs schneidet die Oberfläche des Bildsensors exakt im rechten Winkel.
- Der Abstand zwischen Objektiv und Bildsensor ist so bemessen, dass der Brennpunkt des Objektivs exakt auf der Oberfläche des Bildsensors liegt.
Die Erfindung ermöglicht die Justage des Objektivs zu dem Bildsensor in mehreren Freiheitsgraden. Dabei können die unterschiedlichen Freiheitsgrade unabhängig voneinander eingestellt werden, so dass diese sich nicht gegenseitig beeinflussen.

Zunächst wird das Objektiv senkrecht zur optischen Achse in einer Ebene verschoben, bis die optische Achse den Bildsensor im geometrischen Oberflächenmittelpunkt schneidet.

Hierzu ist der Objektivaufnahmekörper vorgesehen, an dem das Objektiv befestigt ist. Der Bildsensor ist über eine Leiterplatte an einem Bildsensorhalter befestigt. Der Bildsensorhalter ist weiter in einem Bildsensoraufnahmekörper gelagert. Der Objektivaufnahmekörper ist in einer Ebene senkrecht zur optischen Achse verschiebbar an dem Bildsensoraufnahmekörper angeordnet. Durch Verschieben des Objektivaufnahmekörpers kann die optische Achse des Objektivs verschoben werden, bis diese den Bildsensor im geometrischen Oberflächenmittelpunkt schneidet. Zur Fixierung ist der Bildsensoraufnahmekörper mit dem Objektivaufnahmekörper mittels Befestigungsschrauben verbunden. Entweder der Bildsensoraufnahmekörper oder der Objektivaufnahmekörper weist hierzu eine Bohrung auf, die größer ist als der Schraubendurchmesser, wodurch der Objektivaufnahmekörper und der Bildsensoraufnahmekörper ausreichend begrenzt zueinander bewegbar sind. Das jeweils andere Teil, also der Bildsensoraufnahmekörper oder der Objektivaufnahmekörper, weist ein Gewinde auf zur Aufnahme der Befestigungsschraube. Nach Erreichen der finalen Position werden die Schrauben festgezogen.

Danach wird das Objektiv in Richtung der optischen Achse positioniert, bis der Brennpunkt des Objektivs direkt auf der Oberfläche des Bildsensors liegt. Hierzu wird das Objektiv beispielsweise mittels eines Gewindes in dem Objektivaufnahmekörper positioniert und anschließend fixiert, beispielsweise mit einer Kontermutter.

Die genannten Schritte, wonach das Objektiv senkrecht zur optischen Achse in einer Ebene verschoben wird und wonach das Objektiv in Richtung der optischen Achse positioniert wird, bis der Brennpunkt des Objektivs direkt auf der Oberfläche des Bildsensors liegt, können in beliebiger Reihenfolge, also auch in umgekehrter Reihenfolge durchgeführt werden.

In einem dritten Schritt wird der Bildsensor derart um den geometrischen Oberflächenmittelpunkt geschwenkt bzw. gekippt, bis die Oberfläche des Bildsensors in eine gewünschte Richtung zeigt. Dadurch wird entweder der Bildsensor zu dem Objektiv justiert, wobei die Richtung des Objektivs fixiert ist oder der Bildsensor wird zusammen mit dem Objektiv bewegt, wodurch auch die optische Achse des Objektivs mitbewegt wird.

Im Falle wenn der Bildsensor zum Objektiv ausgerichtet werden soll, ist der Bildsensorhalter um den Oberflächenmittelpunkt in dem Radius verschwenkbar an dem Bildsensoraufnahmekörper gelagert. Der Bildsensoraufnahmekörper weist eine Bohrung auf. In der Bohrung ist eine Befestigungsschraube geführt. Die Befestigungsschraube wird in einem Schalenaufnahmekörper geführt, der über eine kugelabschnittsförmige Oberfläche des Bildsensoraufnahmekörpers gleitet. Die Bohrung zur Führung der Befestigungsschraube weist einen größeren Durchmesser als die Befestigungsschraube auf, so dass die Befestigungsschraube in der Bohrung bewegbar ist. Ist die gewünschte Position des Bildsensors zum Objektiv erreicht, wird die Befestigungsschraube angezogen, wodurch der Schalen-aufnahmekörper und der Bildsensorhalter gegen den Bildsensoraufnahmekörper gedrückt werden und dadurch der Bildsensorhalter gegenüber dem Bildsensoraufnahmekörper fixiert wird.

Im Falle wenn das Objektiv mit dem Bildsensor mitbewegt werden soll, ist der Bildsensorhalter um den Oberflächenmittelpunkt in einem Radius verschwenkbar und fixierbar an dem Bildsensoraufnahmekörper gelagert. Dadurch kann die optische Achse des Objektivs zusammen mit dem Bildsensor in eine gewünschte Richtung geschwenkt bzw. gekippt werden. Ein rechter Winkel zwischen optischer Achse des Objektivs und des Bildsensors ist dabei fest eingestellt. Dabei bleibt der Bildsensor zu dem Objektiv unverändert geometrisch ausgerichtet. Die optische Achse des optoelektronischen Sensors kann beispielsweise gegenüber einem Grundgehäuse geschwenkt oder gekippt werden, um ein Objekt besser abzubilden.

Zur Aufnahme einer Befestigungsschraube weist der Bildsensoraufnahmekörper eine Bohrung auf. Die Befestigungsschraube wird in einem Schalenaufnahmekörper geführt, der über eine kugelabschnittsförmige Oberfläche des Bildsensor-aufnahmekörpers gleitet. Die Bohrung zur Führung der Befestigungsschraube weist einen größeren Durchmesser als die Befestigungsschraube auf, so dass die Befestigungsschraube in der Bohrung bewegbar ist. Ist die gewünschte Position des Bildsensors zusammen mit dem Objektiv erreicht, wird die Befesti-gungsschraube angezogen, wodurch der Schalenaufnahmekörper und der Bildsensorhalter gegen den Bildsensoraufnahmekörper gedrückt werden und dadurch der Bildsensorhalter gegenüber dem Bildsensoraufnahmekörper fixiert wird.

In Weiterbildung der Erfindung ist der Bildsensoraufnahmekörper in einem zweiten Radius oder der Schalenaufnahmekörper in einem dritten Radius um den Oberflächenmittelpunkt verschwenkbar und fixierbar an einem Aufnahmekörper gelagert.

Dadurch ist es möglich, den Bildsensor zum Objektiv auszurichten und zusätzlich unabhängig davon die optische Achse des Objektivs zusammen mit dem Bildsensor auszurichten.

Gemäß der ersten Alternative, wonach der Bildsensoraufnahmekörper verschwenkbar an dem Aufnahmekörper gelagert ist, weist der Bildsensoraufnahmekörper einen konvexen kugelförmigen Teilabschnitt mit dem zweiten Radius auf. Der zweite Radius hat seinen Ursprung im geometrischen Oberflächen-mittelpunkt des Bildsensors. Der Aufnahmekörper weist zur Aufnahme des konvexen kugelförmigen Teilabschnitts einen konkaven kugelförmigen Teilabschnitt auf mit dem identischen zweiten Radius. Dadurch ist der Bildsensoraufnahmekörper verschwenkbar oder verkippbar um den zweiten Radius in dem Aufnahmekörper gelagert.

Zur Fixierung des Bildsensoraufnahmekörpers weist der Aufnahmekörper eine Bohrung auf. In der Bohrung ist eine Befestigungsschraube geführt. Die Bohrung zur Führung der Befestigungsschraube weist einen größeren Durchmesser als die Befestigungsschraube auf, so dass die Befestigungsschraube in der Bohrung bewegbar ist. Ist die gewünschte Position des Bildsensoraufnahmekörpers in dem Aufnahmekörper erreicht, wird die Befestigungsschraube angezogen, wodurch der Bildsensoraufnahmekörper gegen den Aufnahmekörper gedrückt wird und dadurch der Bildsensoraufnahmekörper gegenüber dem Aufnahmekörper fixiert wird.

Gemäß der zweiten Alternative, wonach der Schalenaufnahmekörper verschwenkbar an dem Aufnahmekörper gelagert ist, weist der Schalenaufnahmekörper einen konvexen kugelförmigen Teilabschnitt mit einem dritten Radius auf. Der dritte Radius hat seinen Mittelpunkt im geometrischen Oberflächenmittelpunkt des Bildsensors. Der Aufnahmekörper weist zur Aufnahme der konvexen kugelabschnittsförmigen Oberfläche eine konkave kugelabschnittsförmige Oberfläche auf mit dem identischen dritten Radius. Dadurch ist der Schalenaufnahmekörper verschwenkbar oder verkippbar um den zweiten Radius in dem Aufnahmekörper gelagert.

Zur Fixierung des Schalenaufnahmekörpers weist der Aufnahmekörper eine Bohrung auf. In der Bohrung ist eine Befestigungsschraube geführt. Die Bohrung zur Führung der Befestigungsschraube weist einen größeren Durchmesser als die Befestigungsschraube auf, so dass die Befestigungsschraube in der Bohrung bewegbar ist. Ist die gewünschte Position des Schalenaufnahmekörpers in dem Aufnahmekörper erreicht, wird die Befestigungsschraube angezogen, wodurch der Schalenaufnahmekörper gegen den Aufnahmekörper gedrückt wird und dadurch der Schalenaufnahmekörper gegenüber dem Aufnahmekörper fixiert wird.

In Weiterbildung der Erfindung ist ein Objektivhalter vorgesehen, in dem das Objektiv in Richtung einer optischen Achse bewegbar gelagert ist, wobei der Objektivhalter ein konisches Außengewinde mit Längsschlitzen aufweist und eine Spannmutter vorgesehen ist zum Befestigen und Fixieren des Objektivs an dem Objektivhalter.

Dadurch kann der Brennpunkt des Objektivs präzise auf die Oberfläche des Bildsensors eingestellt werden, ohne dass die Position beim Fixieren durch die Spannmutter verstellt wird.

Der Objektivhalter ist an dem Objektivaufnahmekörper befestigt. Der Objektivhalter kann gemäß der Erfindung auch einstückig mit dem Objektivaufnahmekörper verbunden sein. Der Objektivhalter weist beispielsweise ein Innengewinde oder eine Längsführung entlang der optischen Achse zur Aufnahme und bewegbaren Lagerung des Objektivs auf. Dadurch kann der Brennpunkt des Objektivs direkt auf die Bildsensoroberfläche eingestellt werden. Zur Fixierung dieser Position weist der Objektivhalter ein konisches Außengewinde auf, welches eine Spannmutter aufnimmt. Wird die Spannmutter auf das konische Außengewinde gedreht, wird der Objektivhalter an der Stelle der Spannmutter am Umfang gegen das Objektiv gepresst wodurch das Objektiv befestigt und fixiert wird. Gegebenenfalls weist der Objektivhalter im Bereich des konischen Außengewindes Längsschlitze oder Aussparungen auf, um eine bessere Kraftübertragung auf das Objektiv zu ermöglichen. Die Spannmutter kann ein zylindrisches oder auch ein Kegelgewinde aufweisen.

In Weiterbildung der Erfindung ist der Aufnahmekörper in einem Grundkörper drehbar um die optische Achse gelagert und fixierbar.

Dadurch kann der Bildsensor gegenüber einem Abbildungsobjekt gedreht werden, ohne dass die Einstellungen der anderen Freiheitsgrade beeinflusst werden. Beispielsweise können Zeilen eines Bildsensors parallel zu dem Grundkörper, der als Referenz dient, eingestellt werden, wodurch die Abbildung des Objektes eine definierte Orientierung zu dem Grundkörper hat.

In einer besonderen Ausführungsform weist eine Stereokamera jeweils eine erfindungsgemäße Justagevorrichtung auf. Dadurch ist es möglich, beide Objektive und Bildsensoren einer Stereokamera unabhängig voneinander in mehreren Freiheitsgraden auszurichten. Insbesondere ist es möglich, einen Schielwinkel der optischen Achsen der Objektive bei einer Stereokamera unabhängig von anderen Freiheitsgraden einzustellen. Dabei werden die optischen Achsen der Objektive unabhängig voneinander eingestellt.

Stereokameras können für dreidimensionale Überwachungsverfahren eingesetzt werden. Dazu werden nach dem Prinzip der Stereoskopie Bilder der zu überwachenden Szenerie mit einem Empfangssystem, das im Wesentlichen aus zwei zueinander beabstandeten Kameras besteht, aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Entfernungsbild beziehungsweise eine Tiefenkarte berechnet.

Ein besonders anspruchsvolles Anwendungsfeld für Stereokameras ist die Sicherheitstechnik. Dabei wird eine gefährliche Maschine abgesichert, wie etwa eine Presse oder ein Roboter, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein. Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Im Folgenden wird die Erfindung anhand von Ausführungsbeispielen unter Bezugnahme auf die Zeichnung im Einzelnen erläutert.

In der Zeichnung zeigt:
- Figur 1 bis 5: jeweils ein Ausführungsbeispiel einer erfindungsgemäßen Justagevorrichtung;
- Figur 6: zeigt eine Stereokamera mit jeweils einer Justagevorrichtung für jede der zwei Kameras

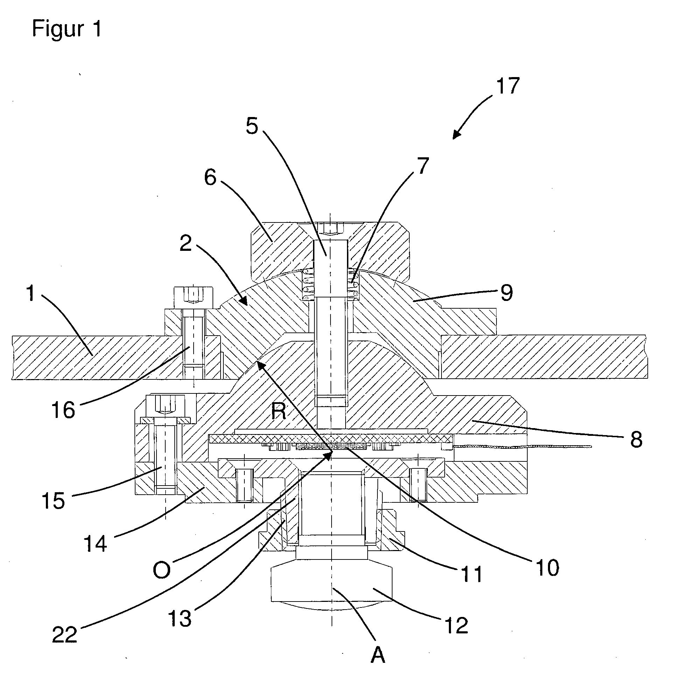

Die Figuren 1 bis 5 zeigen jeweils eine Justagevorrichtung 17 für einen optoelektronischen Sensor, beispielsweise eine Kamera oder eine Stereokamera mit einem Bildsensor 10 mit einem geometrischen Oberflächenmittelpunkt O und einem Objektiv 12, wobei der Bildsensor 10 in einer optischen Achse A des Objektivs 12 angeordnet ist, so dass eine Objektabbildung des Objektivs 12 auf dem Bildsensor 10 erfasst wird, wobei ein Objektivaufnahmekörper 14 vorgesehen ist, an dem das Objektiv 12 befestigt ist und der Objektivaufnahmekörper 14 gegenüber einem Bildsensoraufnahmekörper 9, an dem ein den Bildsensor 10 haltender Bildsensorhalter 8 befestigt ist, senkrecht zur optischen Achse A des Objektivs 12 verschiebbar und fixierbar gelagert ist und wobei das Objektiv 12 in Richtung einer optischen Achse A positionierbar und fixierbar gelagert ist, wobei der Bildsensorhalter 8 um den Oberflächenmittelpunkt O in einem Radius R verschwenkbar und fixierbar an dem Bildsensoraufnahmekörper 9 gelagert ist. In den Figuren 1 bis 6 sind gleiche Teile mit gleichen Bezugszeichen gekennzeichnet.

Figur 1 zeigt ein erstes Ausführungsbeispiel einer erfindungsgemäßen Justagevorrichtung 17. An einem Grundkörper 1 ist ein Aufnahmekörper 2 befestigt. Der Aufnahmekörper 2 ist mit mehreren Befestigungsschrauben 16, von denen lediglich eine in der Schnittdarstellung gemäß Figur 1 dargestellt ist, an dem Grundkörper 1 befestigt. Die Befestigungsschrauben 16 werden von einem Gewinde in dem Grundkörper 1 gehalten. Der Aufnahmekörper 2 weist zur Aufnahme der Befestigungsschrauben 16 kreisbogenförmige Langlöcher auf, so dass der Aufnahmekörper 2 gegenüber dem Grundkörper 1 um die optische Achse A verdrehbar ist. Dadurch kann der Bildsensor 10 in dem Bildsensorhalter 8 gegenüber dem Grundkörper 1 um die optische Achse A herum gedreht werden.

Der Aufnahmekörper 2 bildet gemäß Figur 1 gleichzeitig einen Bildsensoraufnahmekörper 9. Der Aufnahmekörper 2, bzw. der Bildsensoraufnahmekörper 9 dient zur beweglichen Lagerung eines Bildsensorhalters 8.

Der Bildsensoraufnahmekörper 9 ist beispielsweise drehsymmetrisch ausgebildet und weist an der zu einem Schalenaufnahmekörper 6 weisenden Seite eine konvexe teilkugelförmige Oberfläche auf. Die teilkugelförmige Oberfläche weist in der Mitte eine Bohrung auf für eine Befestigungsschraube 5, mit der der Bildsensorhalter 8 an dem Bildsensoraufnahmekörper 9 beweglich und fixierbar gehalten ist. Die Befestigungsschraube 5 ist hierzu mittels einer Bohrung durch den Schalenaufnahmekörper 6 geführt. Die Befestigungsschraube 5 ist mit ihrem Schraubenende an dem Bildsensorhalter 8 befestigt. Der Schalenaufnahmekörper 6 weist an der zu dem Bildsensoraufnahmekörper 9 zugewandten Seite eine konkave teilkugelförmige Oberfläche auf, damit der Schalenaufnahmekörper 6 auf der konvexen teilkugelförmigen Oberfläche des Bildsensoraufnahmekörpers 9 geführt ist. Die Bohrung durch den Bildsensoraufnahmekörper 9 weist einen größeren Durchmesser auf als die Befestigungsschraube 5. Dadurch kann die Befestigungsschraube 5 in der Bohrung hin und her bewegt werden, um den Bildsensorhalter 8 gegenüber dem Bildsensoraufnahmekörper 9 zu justieren. Damit der Bildsensorhalter 8 beim Justiervorgang am Bildsensoraufnahmekörper 9 anliegt, ist in der Bohrung des Bildsensoraufnahmekörpers 9 eine Druckfeder 7 angeordnet, die auf einem Absatz in der Bohrung des Bildsensoraufnahmekörpers 9 aufliegt und an dem Schalenaufnahmekörper 6 anliegt, so dass der Bildsensorhalter 8 gegen den Bildsensoraufnahmekörper 9 gedrückt wird, um eine spielfreie Justage zwischen Bildsensorhalter 8 und Bildsensoraufnahmekörper 9 zu erhalten. Durch Festziehen der Befestigungsschraube 5 wird der Bildsensorhalter 8 und der Schalenaufnahmekörper 6 gegen den Bildsensoraufnahmekörper 9 gedrückt, so dass der Bildsensorhalter 8 mit dem Bildsensor 10 gegenüber dem Grundkörper 1 fixiert ist.

Weiter ist ein Objektivaufnahmekörper 14 vorgesehen, an dem das Objektiv 12 befestigt ist. Der Bildsensor 10 ist an dem Bildsensorhalter 8 befestigt. Der Bildsensorhalter 8 ist in dem Bildsensoraufnahmekörper 9 gelagert. Der Objektivaufnahmekörper 14 ist in einer Ebene senkrecht zur optischen Achse A verschiebbar an dem Bildsensorhalter 8 angeordnet. Durch Verschieben des Objektivaufnahmekörpers 14 kann die optische Achse A des Objektivs 12 verschoben werden, bis diese den Bildsensor 10 im geometrischen Oberflächenmittelpunkt O schneidet. Zur Fixierung ist der Bildsensorhalter 8 mit dem Objektivaufnahmekörper 14 mittels Befestigungsschrauben 15 verbunden. Entweder der Bildsensorhalter 8 oder der Objektivaufnahmekörper 14 weist hierzu eine Bohrung auf, die größer ist als der Durchmesser der Befestigungsschraube 15, wodurch der Objektivaufnahmekörper 14 und der Bildsensorhalter 8 zueinander bewegbar sind. Das jeweils andere Teil, also der Bildsensorhalter 8 oder der Objektivaufnahmekörper 14 weisen Gewinde auf zur Aufnahme der Befesti-gungsschrauben 15. Nach Erreichen der finalen Position werden die Befesti-gungsschrauben 15 festgezogen, wodurch das Objektiv 12 gegenüber dem Bildsensor 10 fixiert ist.

Danach wird das Objektiv 12 in Richtung der optischen Achse A positioniert, bis der Brennpunkt des Objektivs 12 direkt auf der Oberfläche des Bildsensors 10 liegt. Hierzu ist ein Objektivhalter 22 an dem Objektivaufnahmekörper 14 befestigt. Der Objektivhalter 22 kann gemäß der Erfindung auch einstückig mit dem Objektivaufnahmekörper 14 verbunden sein. Der Objektivhalter 22 weist beispielsweise ein Innengewinde oder eine Längsführung entlang der optischen Achse A zur Aufnahme und bewegbaren Lagerung des Objektivs 12 auf. Dadurch kann der Brennpunkt des Objektivs 12 direkt auf die Bildsensoroberfläche eingestellt werden. Zur Fixierung dieser Position weist der Objektivhalter 22 ein konisches Außen-gewinde 13 auf, welches eine Spannmutter 11 aufnimmt. Wird die Spannmutter 11 auf das konische Außengewinde 13 gedreht, wird der Objektivhalter 22 an der Stelle der Spannmutter 11 im Umfang radial gegen das Objektiv 12 gepresst, wodurch das Objektiv 12 befestigt und fixiert wird. Gegebenenfalls weist der Objektivhalter 22 im Bereich des konischen Außengewindes 13 Längsschlitze oder Aussparungen auf, um eine bessere Kraftübertragung auf das Objektiv 12 zu ermöglichen.

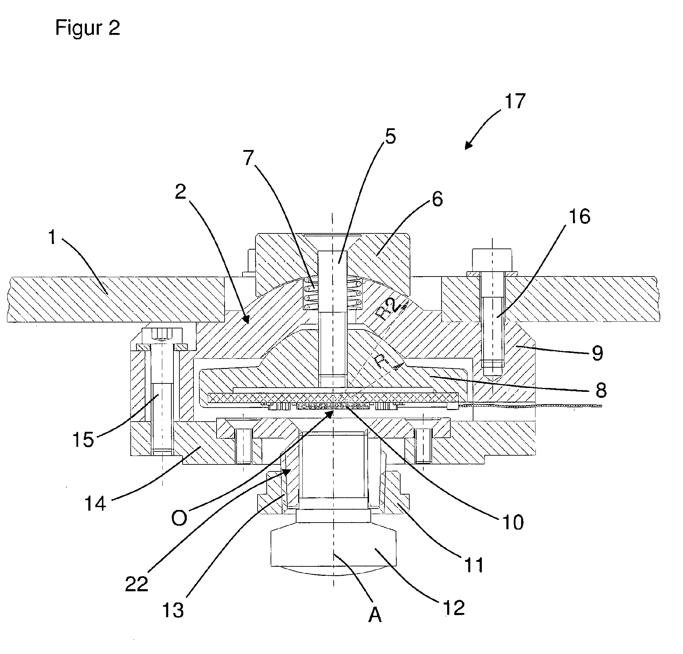

Figur 2 zeigt ein zweites Ausführungsbeispiel einer erfindungsgemäßen Justagevorrichtung 17. Im Unterschied zu Figur 1 kann gemäß dem Ausführungsbeispiel nach Figur 2 der Bildsensor 10 gegenüber der optischen Achse A des Objektivs 12 gedreht oder verkippt werden.

Um den Bildsensor 10 gegenüber dem Objektiv 12 auszurichten ist der Bildsensorhalter 8 um den Oberflächenmittelpunkt O in dem Radius R verschwenkbar an dem Bildsensoraufnahmekörper 9 gelagert. Der Bildsensoraufnahmekörper 9 weist eine Bohrung auf. In der Bohrung ist eine Befestigungsschraube 5 geführt. Die Befestigungsschraube 5 wird in einem Schalenaufnahmekörper 6 geführt der über eine kugelabschnittsförmige Oberfläche des Bildsensoraufnahmekörpers 9 gleitet. Die Bohrung zur Führung der Befestigungsschraube 5 weist einen größeren Durchmesser als die Befestigungsschraube 5 auf, so dass die Befestigungsschraube 5 in der Bohrung bewegbar ist. Ist die gewünschte Position des Bildsensors 10 zum Objektiv 12 erreicht, wird die Befestigungsschraube 5 angezogen, wodurch der Schalenaufnahmekörper 6 und der Bildsensorhalter 8 gegen den Bildsensoraufnahmekörper 9 gedrückt werden und dadurch der Bildsensorhalter 8 gegenüber dem Bildsensoraufnahmekörper 9 fixiert wird.

Weiter kann der Bildsensoraufnahmekörper 9 gegenüber dem Grundkörper 1 um die optische Achse A gedreht werden. An dem Grundkörper 1 ist der Bildsensoraufnahmekörper 9 befestigt. Der Bildsensoraufnahmekörper 9 ist mit mehreren Befestigungsschrauben 16, von denen lediglich eine in der Schnittdarstellung gemäß Figur 2 dargestellt ist, an dem Grundkörper 1 befestigt. Die Befestigungsschrauben 16 werden von einem Gewinde in dem Bildsensoraufnahmekörper 9 gehalten. Der Grundkörper 1 weist zur Aufnahme der Befestigungsschrauben 16 kreisbogenförmige Langlöcher auf, so dass der Bildsensoraufnahmekörper 9 gegenüber dem Grundkörper 1 um die optische Achse A verdrehbar ist. Dadurch kann der Bildsensor 10 in dem Bildsensorhalter 8 gegenüber dem Grundkörper 1 um die optische Achse A herum gedreht werden.

Weiter ist gemäß Figur 2 wie bei Figur 1 ein Objektivaufnahmekörper 14 vorgesehen, an dem das Objektiv 12 befestigt ist. Der Bildsensor 10 ist an dem Bildsensorhalter 8 befestigt. Der Bildsensorhalter 8 ist in dem Bildsensoraufnahmekörper 9 beweglich gelagert. Der Objektivaufnahmekörper 14 ist in einer Ebene senkrecht zur optischen Achse A verschiebbar an dem Bildsensoraufnahmekörper 9 angeordnet. Durch Verschieben des Objektivaufnahmekörpers 14 kann die optische Achse A des Objektivs 12 verschoben werden, bis diese den Bildsensor 10 im geometrischen Oberflächenmittelpunkt O schneidet. Zur Fixierung ist der Bildsensoraufnahmekörper 9 mit dem Objektivaufnahmekörper 14 mittels Befestigungsschrauben 15 verbunden. Entweder der Bildsensoraufnahmekörper 9 oder der Objektivaufnahmekörper 14 weist hierzu eine Bohrung auf, die größer ist als der Durchmesser der Befestigungsschraube 15, wodurch der Objektivaufnahmekörper 14 und der Bildsensoraufnahmekörper 9 zueinander bewegbar bzw. verschiebbar sind. Das jeweils andere Teil, also der Bildsensoraufnahmekörper 9 oder der Objektivaufnahmekörper 14 weisen ein Gewinde auf zur Aufnahme der Befestigungsschraube 15. Nach Erreichen der finalen Position werden die Befestigungsschrauben 15 festgezogen, wodurch das Objektiv 12 gegenüber dem Bildsensor 10 fixiert ist.

Weiter kann wie bei Figur 1 gemäß Figur 2 das Objektiv 12 in Richtung der optischen Achse A positioniert werden, bis der Brennpunkt des Objektivs 12 direkt auf der Oberfläche des Bildsensors 10 liegt. Hierzu ist ein Objektivhalter 22 an dem Objektivaufnahmekörper 14 befestigt. Der Objektivhalter 22 kann gemäß der Erfindung auch einstückig mit dem Objektivaufnahmekörper 14 verbunden sein. Der Objektivhalter 22 weist beispielsweise ein Innengewinde oder eine Längsführung entlang der optischen Achse A auf zur Aufnahme und bewegbaren Lagerung des Objektivs 12. Dadurch kann der Brennpunkt des Objektivs 12 direkt auf die Bildsensoroberfläche eingestellt werden. Zur Fixierung dieser Position weist der Objektivhalter 22 ein konisches Außengewinde 13 auf, welches eine Spannmutter 11 aufnimmt. Wird die Spannmutter 11 auf das konische Außengewinde 13 gedreht, wird der Objektivhalter 22 an der Stelle der Spannmutter 11 im Umfang radial gegen das Objektiv 12 gepresst, wodurch das Objektiv 12 befestigt und fixiert wird. Gegebenenfalls weist der Objektivhalter 22 im Bereich des konischen Außengewindes 13 Längsschlitze oder Aussparungen auf, um eine bessere Kraftübertragung auf das Objektiv 12 zu ermöglichen.

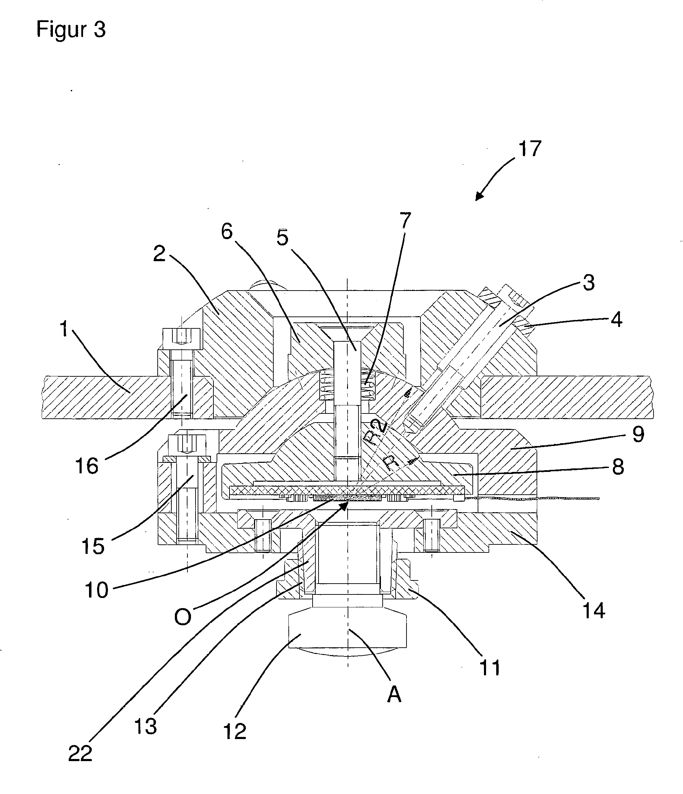

Figur 3 zeigt ein weiteres Ausführungsbeispiel der vorliegenden Erfindung. Im Unterschied zu Figur 2 ist bei Figur 3 der Bildsensoraufnahmekörper 9 drehbeweglich in dem Aufnahmeköper 2 gelagert.

Der Bildsensoraufnahmekörper 9 weist an der zu einem Aufnahmeköper 2 weisenden Seite eine konvexe teilkugelförmige Oberfläche auf, damit der Bildsensoraufnahmekörper 9 auf der konvexen teilkugelförmigen Oberfläche des Aufnahmekörpers 2 geführt ist. Die teilkugelförmige Oberfläche weist wenigstens eine Bohrung auf für eine Befestigungsschraube 3, mit dem der Bildsensoraufnahmekörper 9 an dem Aufnahmeköper 2 beweglich und fixierbar gehalten ist. Gemäß der Erfindung können mehrere Befestigungsschrauben 3 vorgesehen sein. An der Auflagefläche der Befestigungsschraube ist der Aufnahmekörper kugelabschnittsförmig ausgebildet zur Aufnahme einer Kegelscheibe 4, so dass die Befestigungsschraube 3 mit der Kegelscheibe 4 verschiebbar auf der Oberfläche des Aufnahmekörpers 2 aufliegt. Die Befestigungsschraube 3 ist hierzu mittels einer Bohrung durch den Aufnahmeköper 2 geführt. Die Befestigungsschraube 3 ist mit ihrem Schraubenende an dem Bildsensoraufnahmekörper 9 befestigt. Die Bohrung durch den Aufnahmekörper 2 weist einen größeren Durchmesser auf als die Befestigungsschraube 3. Dadurch kann die Befestigungsschraube 3 in der Bohrung hin und her bewegt werden, um den Bildsensoraufnahmekörper 9 gegenüber dem Aufnahmekörper 2 zu justieren. Die Justage erfolgt dabei um den Oberflächenmittelpunkt O. Damit der Bildsensoraufnahmekörper 9 beim Justiervorgang am Aufnahmekörper 2 anliegt ist in der Bohrung des Aufnahmekörpers 2 ggf. eine Druckfeder angeordnet, die ggf. auf einem Absatz in der Bohrung des Aufnahmekörpers 2 aufliegt und an der Kegelscheibe 4 anliegt, so dass der Bildsensoraufnahmekörper 9 gegen den Aufnahmekörper 2 gedrückt wird, um eine spielfreie Justage zwischen Bildsensoraufnahmekörper 9 und Aufnahmekörper 2 zu erhalten. Durch Festziehen der Befestigungsschraube 3 wird der Bildsensoraufnahmekörper 9 und die Kegelscheibe 4 gegen den Aufnahmekörper 2 gedrückt, so dass der Bildsensoraufnahmekörper 9 mit dem Bildsensor gegenüber dem Aufnahmekörper 2 und dem Grundkörper 1 fixiert ist.

Weiter ist gemäß Figur 3 der Bildsensorhalter 8 schwenkbar in dem Bildsensoraufnahmekörper 9 gelagert. Um den Bildsensor 10 gegenüber dem Objektiv 12 auszurichten, ist der Bildsensorhalter 8 um den Oberflächenmittelpunkt O in dem Radius R verschwenkbar an dem Bildsensoraufnahmekörper 9 gelagert. Der Bildsensoraufnahmekörper 9 weist eine Bohrung auf. In der Bohrung ist eine Befestigungsschraube 5 geführt. Die Befestigungsschraube 5 wird in einem Schalenaufnahmekörper 6 gehalten der über eine kugelabschnittsförmige Oberfläche des Bildsensoraufnahmekörpers 9 gleitet. Die Bohrung zur Führung der Befestigungsschraube 5 weist einen größeren Durchmesser als die Befestigungsschraube 5 auf, so dass die Befestigungsschraube 5 in der Bohrung bewegbar ist. Ist die gewünschte Position des Bildsensors 10 zum Objektiv 12 erreicht, wird die Befestigungsschraube 5 angezogen, wodurch der Schalenaufnahmekörper 6 und der Bildsensorhalter 8 gegen den Bildsensoraufnahmekörper 9 gedrückt werden und dadurch der Bildsensorhalter 8 gegenüber dem Bildsensoraufnahmekörper 9 fixiert wird.

Weiter kann gemäß Figur 3 der Aufnahmekörper 2 gegenüber dem Grundkörper 1 um die optische Achse A gedreht werden. An dem Grundkörper 1 ist der Aufnahmekörper 2 befestigt. Der Aufnahmekörper 2 ist mit mehreren Befestigungsschrauben 16, von denen lediglich eine in der Schnittdarstellung gemäß Figur 3 dargestellt ist, an dem Grundkörper 1 befestigt. Die Befestigungsschrauben 16 werden von einem Gewinde in dem Grundkörper gehalten. Der Aufnahmekörper 2 weist zur Aufnahme der Befestigungsschrauben 16 kreisbogenförmige Langlöcher auf, so dass der Aufnahmekörper 2 gegenüber dem Grundkörper um die optische Achse A verdrehbar ist. Dadurch kann der Bildsensor 10 in dem Bildsensorhalter 8 durch den Aufnahmekörper 2 gegenüber dem Grundkörper 1 um die optische Achse A herum gedreht werden.

Weiter ist bei Figur 3 wie bei Figur 1 ein Objektivaufnahmekörper 14 vorgesehen, an dem das Objektiv 12 befestigt ist. Der Bildsensor 10 ist an dem Bildsensorhalter 8 befestigt. Der Bildsensorhalter 8 ist in dem Bildsensoraufnahmekörper 9 gelagert. Der Objektivaufnahmekörper 14 ist in einer Ebene senkrecht zur optischen Achse A verschiebbar an dem Bildsensoraufnahmekörper 9 angeordnet. Durch Verschieben des Objektivaufnahmekörpers 14 kann die optische Achse A des Objektivs 12 verschoben werden, bis diese den Bildsensor 10 im geometrischen Oberflächenmittelpunkt O schneidet. Zur Fixierung ist der Bildsensoraufnahmekörper 9 mit dem Objektivaufnahmekörper 14 mittels Befestigungsschrauben 15 verbunden. Entweder der Bildsensoraufnahmekörper 9 oder der Objektivaufnahmekörper 14 weist hierzu eine Bohrung auf, die größer ist als der Durchmesser der Befestigungsschraube 15, wodurch der Objektivaufnahmekörper 14 und der Bildsensoraufnahmekörper 9 zueinander bewegbar sind. Das jeweils andere Teil, also der Bildsensoraufnahmekörper 9 oder der Objektivaufnahmekörper 14, weist ein Gewinde auf zur Aufnahme der Befestigungsschraube 15. Nach Erreichen der finalen Position werden die Befestigungsschrauben 15 festgezogen, wodurch das Objektiv 12 gegenüber dem Bildsensor 10 fixiert ist.

Weiter kann wie bei Figur 1 gemäß Figur 3 das Objektiv 12 in Richtung der optischen Achse A positioniert werden, bis der Brennpunkt des Objektivs 12 direkt auf der Oberfläche des Bildsensors 10 liegt. Hierzu ist ein Objektivhalter 22 an dem Objektivaufnahmekörper 14 befestigt. Der Objektivhalter 22 kann gemäß der Erfindung auch einstückig mit dem Objektivaufnahmekörper 14 verbunden sein. Der Objektivhalter 22 weist beispielsweise ein Innengewinde oder eine Längsführung entlang der optischen Achse A auf zur Aufnahme und bewegbaren Lagerung des Objektivs 12. Dadurch kann der Brennpunkt des Objektivs 12 direkt auf die Bildsensoroberfläche eingestellt werden. Zur Fixierung dieser Position weist der Objektivhalter 22 ein konisches Außengewinde 13 auf, welches eine Spannmutter 11 aufnimmt. Wird die Spannmutter 11 auf das konische Außengewinde 13 gedreht, wird der Objektivhalter 22 an der Stelle der Spannmutter 11 im Umfang radial gegen das Objektiv 12 gepresst, wodurch das Objektiv 12 befestigt und fixiert wird. Gegebenenfalls weist der Objektivhalter 22 im Bereich des konischen Außengewindes 13 Längsschlitze oder Aussparungen auf, um eine bessere Kraftübertragung auf das Objektiv 12 zu ermöglichen.

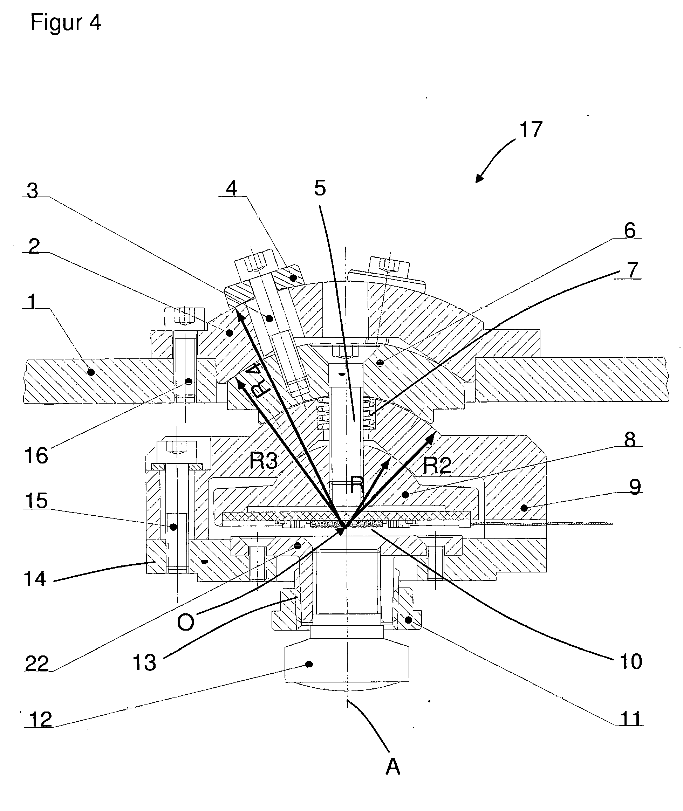

Figur 4 zeigt ein weiteres Ausführungsbeispiel einer erfindungsgemäßen Justagevorrichtung, wobei der Bildsensoraufnahmekörper 9 mit einem Schalenaufnahmekörper 6 schwenkbar in einem Aufnahmekörper 2 gelagert ist.

Der Bildsensoraufnahmekörper 9 gemäß Figur 4 weist an der zu dem Schalenaufnahmeköper 6 weisenden Seite eine konvexe teilkugelförmige Oberfläche auf. Der Schalenaufnahmekörper 6 weist wiederum an der zu dem Aufnahmekörper 2 weisenden Seite eine konvexe teilkugelförmige Oberfläche mit dem dritten Radius R3 auf. Die teilkugelförmige Oberfläche des Schalenaufnahmekörpers 6 weist eine Bohrung auf für eine Befestigungsschraube 3, mit der der Schalenaufnahmekörper 6 an dem Aufnahmekörper 2 beweglich und fixierbar gehalten ist. Gemäß der Erfindung können wie bereits erwähnt mehrere Befestigungschrauben 3 vorgesehen sein. An der Auflagefläche der Befestigungsschraube 3 ist der Aufnahmekörper 2 kugelabschnittsförmig ausgebildet zur Aufnahme einer Kegelscheibe 4, so dass die Befestigungsschraube 3 mit der Kegelscheibe 4 verschiebbar auf der Oberfläche des Aufnahmekörpers 2 aufliegt. Die Befestigungsschraube 3 ist hierzu mittels einer Bohrung durch den Aufnahmekörper 2 geführt. Die Befestigungsschraube 3 ist mit ihrem Schraubenende an dem Schalenaufnahmekörper 6 befestigt. Der Schalenaufnahmekörper 6 weist an der zu dem Aufnahmekörper 2 zugewandten Seite eine konkave teilkugelförmige Oberfläche auf, damit der Schalenaufnahmekörper 6 in der Kegelfläche des Aufnahmekörpers 2 geführt ist. Die Bohrung durch den Aufnahmekörper 2 weist einen größeren Durchmesser auf als die Befestigungsschraube 3. Dadurch kann die Befestigungsschraube 3 in der Bohrung hin und her bewegt werden, um den Schalenaufnahmekörper 6 gegenüber dem Aufnahmekörper 2 in dem dritten Radius R3 zu justieren. Damit der Schalenaufnahmekörper 6 beim Justiervorgang am Aufnahmekörper 2 anliegt, ist in der Bohrung des Aufnahmekörpers 2 ggf. eine Druckfeder angeordnet, die ggf. auf einem Absatz in der Bohrung des Aufnahmekörpers 2 aufliegt und an der Kegelscheibe 4 anliegt, so dass der Schalenaufnahmekörper 6 gegen den Aufnahmekörper 2 gedrückt wird, um eine spielfreie Justage zwischen Schalenaufnahmekörper 6 und Aufnahmekörper 2 zu erhalten. Durch Festziehen der Befestigungsschraube 3 wird der Schalenaufnahmekörper 6 mit dem Bildsensoraufnahmekörper 9 gegen den Aufnahmekörper 2 gedrückt, so dass der Schalenaufnahmekörper 6 mit dem daran befestigten Bildsensoraufnahmekörper 9 mit dem Bildsensor 10 gegenüber dem Aufnahmekörper 2 und dem Grundkörper 1 fixiert ist.

Weiter kann gemäß Figur 4 der Bildsensoraufnahmekörper 9 mit dem Schalenaufnahmekörper 6 und dem Aufnahmekörper 2 gegenüber dem Grundkörper 1 um die optische Achse A gedreht werden. An dem Schalenaufnahmekörper 6 ist der Bildsensoraufnahmekörper 9 befestigt. Der Aufnahmekörper 2 ist mit mehreren Befestigungsschrauben 16, von denen lediglich eine in der Schnittdarstellung gemäß Figur 4 dargestellt ist, an dem Grundkörper 1 befestigt. Die Befestigungsschrauben 16 werden von einem Gewinde in dem Grundkörper 1 gehalten. Der Aufnahmekörper 2 weist zur Aufnahme der Befestigungsschrauben 16 kreisbogenförmige Langlöcher auf, so dass der Aufnahmekörper 2 gegenüber dem Grundkörper 1 um die optische Achse A verdrehbar ist. Dadurch kann der Bildsensor 10 in dem Bildsensorhalter 8 gegenüber dem Grundkörper 1 um die optische Achse A herum gedreht werden.

Weiter ist es gemäß Figur 4 vorgesehen, mit dem Bildsensoraufnahmekörper 9 das Objektiv 12 gegenüber dem Bildsensor zu verkippen, wobei eine Fixierung mittels der Befestigungsschraube 5 möglich ist.

Um das Objektiv 12 gegenüber dem Bildsensor 10 auszurichten, ist der Bildsensoraufnahmekörper 9 um den Oberflächenmittelpunkt O in dem zweiten Radius R2 verschwenkbar an dem Schalenaufnahmekörper 6 gelagert. Der Bildsensoraufnahmekörper 9 weist eine Bohrung für die Befestigungsschraube 5 auf. Die Befestigungsschraube 5 wird in dem Bildsensoraufnahmekörper 9 geführt, der über eine kugelabschnittsförmige Oberfläche des Schalenaufnahmekörpers 6 gleitet. Die Bohrung zur Führung der Befestigungsschraube 5 weist einen größeren Durchmesser als die Befestigungsschraube 5 auf, so dass die Befestigungsschraube 5 in der Bohrung bewegbar ist. Ist die gewünschte Position des Objektivs 12 zum Bildsensor 10 erreicht, wird die Befestigungsschraube 5 angezogen, wodurch der Schalenaufnahmekörper 6 und der Bildsensorhalter 8 gegen den Bildsensoraufnahmekörper 9 gedrückt werden und dadurch der Bildsensoraufnahmekörper 9 gegenüber dem Schalenaufnahmekörper 6 fixiert wird.

Weiter ist gemäß Figur 4 wie bei Figur 1 ein Objektivaufnahmekörper 14 vorgesehen, an dem das Objektiv 12 befestigt ist. Der Bildsensor 10 ist an dem Bildsensorhalter 8 befestigt. Der Bildsensorhalter 8 ist in dem Bildsensoraufnahmekörper 9 gelagert. Der Objektivaufnahmekörper 14 ist in einer Ebene senkrecht zur optischen Achse A verschiebbar an dem Bildsensoraufnahmekörper 9 angeordnet. Durch Verschieben des Objektivaufnahmekörpers 14 kann die optische Achse A des Objektivs 12 verschoben werden, bis diese den Bildsensor 10 im geometrischen Oberflächenmittelpunkt O schneidet. Zur Fixierung ist der Bildsensoraufnahmekörper 9 mit dem Objektivaufnahmekörper 14 mittels Befestigungsschrauben 15 verbunden. Entweder der Bildsensoraufnahmekörper 9 oder der Objektivaufnahmekörper 14 weist hierzu eine Bohrung auf, die größer ist als der Durchmesser der Befestigungsschraube 15, wodurch der Objektivaufnahmekörper 14 und der Bildsensoraufnahmekörper 9 zueinander bewegbar sind. Das jeweils andere Teil, also der Bildsensoraufnahmekörper 9 oder der Objektivaufnahmekörper 14 weisen ein Gewinde auf zur Aufnahme der Befestigungsschraube 15. Nach Erreichen der finalen Position werden die Befestigungsschrauben 15 festgezogen, wodurch das Objektiv 12 gegenüber dem Bildsensor 10 fixiert ist.

Weiter kann wie bei Figur 1 gemäß Figur 4 das Objektiv 12 in Richtung der optischen Achse A positioniert werden, bis der Brennpunkt des Objektivs 12 direkt auf der Oberfläche des Bildsensors 10 liegt. Hierzu ist ein Objektivhalter 22 an dem Objektivaufnahmekörper 14 befestigt. Der Objektivhalter 22 kann gemäß der Erfindung auch einstückig mit dem Objektivaufnahmekörper 14 verbunden sein. Der Objektivhalter 22 weist beispielsweise ein Innengewinde oder eine Längsführung entlang der optischen Achse A auf zur Aufnahme und bewegbaren Lagerung des Objektivs 12. Dadurch kann der Brennpunkt des Objektivs 12 direkt auf die Bildsensoroberfläche eingestellt werden. Zur Fixierung dieser Position weist der Objektivhalter 22 ein konisches Außengewinde 13 auf, welches eine Spannmutter 11 aufnimmt. Wird die Spannmutter 11 auf das konische Außengewinde 13 gedreht, wird der Objektivhalter 22 an der Stelle der Spannmutter 11 im Umfang radial gegen das Objektiv 12 gepresst, wodurch das Objektiv 12 befestigt und fixiert wird. Gegebenenfalls weist der Objektivhalter 22 im Bereich des konischen Außengewindes 13 Längsschlitze oder Aussparungen auf, um eine bessere Kraftübertragung auf das Objektiv 12 zu ermöglichen.

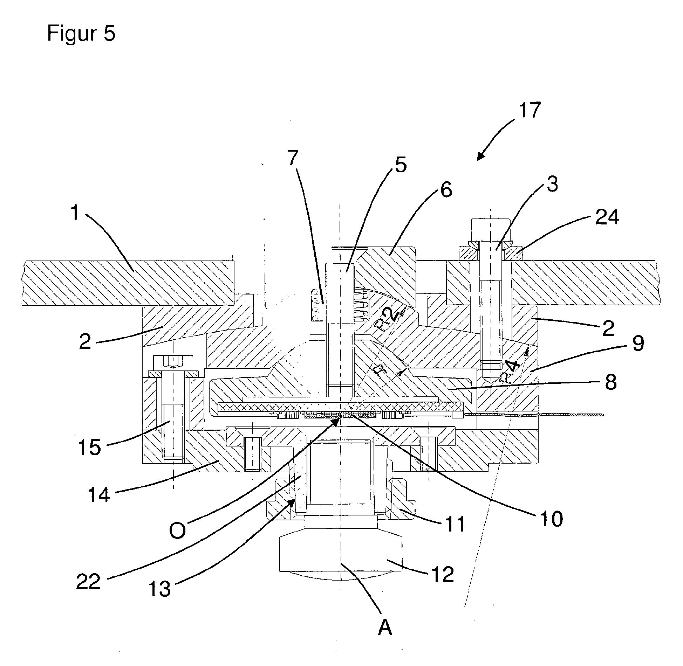

Figur 5 zeigt ein weiteres Ausführungsbeispiel der vorliegenden Erfindung. Im Unterschied zu Figur 3 ist bei Figur 5 der Bildsensoraufnahmekörper 9 in einem anderen vierten Radius R4 drehbeweglich in dem Aufnahmeköper 2 gelagert.

Der Bildsensoraufnahmekörper 9 gemäß Figur 5 weist an der zu einem Aufnahmekörper 2 weisenden Seite eine konvexe teilkugelförmige Oberfläche mit dem vierten Radius R4 auf. Die teilkugelförmige Oberfläche weist eine Bohrung auf für eine Befestigungsschraube 3, mit der der Bildsensoraufnahmekörper 9 an dem Aufnahmekörper 2 und an dem Grundkörper 1 beweglich und fixierbar gehalten ist. Die Befestigungsschraube 3 ist mittels einer Bohrung durch den Aufnahmekörper 2 und den Grundkörper 1 geführt. Die Befestigungsschraube 3 ist mit ihrem Schraubenende an dem Bildsensoraufnahmekörper 9 befestigt. Der Bildsensoraufnahmekörper 9 weist an der zu dem Aufnahmekörper 2 zugewandten Seite eine konvexe teilkugelförmige Oberfläche auf, damit der Bildsensoraufnahmekörper 9 in der konkaven teilkugelförmigen Oberfläche des Aufnahmekörpers 2 geführt ist. Die Bohrung durch den Aufnahmekörper 2 und den Grundkörper 1 weist einen größeren Durchmesser auf als die Befestigungsschraube 3. Dadurch kann die Befestigungsschraube 3 in der Bohrung hin und her bewegt werden, um den Bildsensoraufnahmekörper 9 gegenüber dem Aufnahmekörper 2 und dem Grundkörper 1 zu justieren. Damit der Bildsensoraufnahmekörper 9 beim Justiervorgang am Aufnahmekörper 2 anliegt, ist in der Bohrung des Aufnahmekörpers 2 ggf. eine Druckfeder angeordnet, die ggf. auf einem Absatz in der Bohrung des Aufnahmekörpers 2 aufliegt und an einer Kegelpfanne 24 anliegt, so dass der Bildsensoraufnahmekörper 9 gegen den Aufnahmekörper 2 gedrückt wird, um eine spielfreie Justage zwischen Bildsensoraufnahmekörper 9 und Aufnahmekörper 2 zu erhalten. Durch Festziehen der Befestigungsschraube 3 wird der Bildsensoraufnahmekörper 9 und die Kegelpfanne 24 gegen den Aufnahmekörper 2 gedrückt, so dass der Bildsensoraufnahmekörper 9 mit dem Bildsensor gegenüber dem Aufnahmekörper 2 und dem Grundkörper 1 fixiert ist.

Weiter ist gemäß Figur 5 der Bildsensorhalter 8 verschwenkbar oder verkippbar in dem Bildsensoraufnahmekörper 9 gelagert und mit der Befestigungsschraube 5 fixierbar. Um den Bildsensor 10 gegenüber dem Objektiv 12 auszurichten, ist der Bildsensorhalter 22 um den Oberflächenmittelpunkt O in dem Radius R verschwenkbar an dem Bildsensoraufnahmekörper 9 gelagert. Der Bildsensoraufnahmekörper 9 weist eine Bohrung auf. In der Bohrung ist eine Befestigungsschraube 5 geführt. Die Befestigungsschraube 5 wird in einem Schalenaufnahmekörper 6 geführt, der über eine kugelabschnittsförmige Oberfläche des Bildsensoraufnahmekörpers 9 gleitet. Die Bohrung zur Führung der Befestigungsschraube 5 weist einen größeren Durchmesser als die Befestigungsschraube 5 auf, so dass die Befestigungsschraube 5 in der Bohrung bewegbar ist. Ist die gewünschte Position des Bildsensors 10 zum Objektiv 12 erreicht, wird die Befestigungsschraube 5 angezogen, wodurch der Schalenaufnahmekörper 6 und der Bildsensorhalter 8 gegen den Bildsensoraufnahmekörper 9 gedrückt werden und dadurch der Bildsensorhalter 8 gegenüber dem Bildsensoraufnahmekörper 9 fixiert wird.

Weiter ist gemäß Figur 5 eine Drehung des Bildsensoraufnahmekörpers um die optische Achse A möglich, wobei eine Fixierung mittels der Befestigungsschraube 3 möglich ist. Es wird also der Bildsensoraufnahmekörper 9 gegenüber dem Grundkörper 1 um die optische Achse A gedreht. An dem Grundkörper 1 ist der Bildsensoraufnahmekörper 9 über den Aufnahmekörper 2 befestigt. Der Bildsensoraufnahmekörper 9 ist mit mehreren Befestigungsschrauben 3, von denen lediglich eine in der Schnittdarstellung gemäß Figur 5 dargestellt ist, an dem Grundkörper 1 befestigt. Die Befestigungsschrauben 3 werden von einer Gewindeaufnahme in dem Bildsensoraufnahmekörper 9 gehalten. Der Grundkörper 1 weist zur Aufnahme der Befestigungsschrauben 3 kreisbogenförmige Langlöcher auf, so dass der Bildsensoraufnahmekörper 9 gegenüber dem Grundkörper um die optische Achse A verdrehbar ist. Dadurch kann der Bildsensor 10 in dem Bildsensorhalter 8 über den Bildsensoraufnahmekörper 9 gegenüber dem Grundkörper 1 um die optische Achse A herum gedreht werden.

Weiter ist gemäß Figur 5 eine Verschiebung des Bildsensoraufnahmekörpers 9 senkrecht zur optischen Achse A gegenüber dem Grundkörper 1 vorgesehen. Der Bildsensoraufnahmekörper 9 ist über den Aufnahmekörper 2 in einer Ebene senkrecht zur optischen Achse A verschiebbar an dem Grundkörper 1 angeordnet. Durch Verschieben des Bildsensoraufnahmekörpers 9 zusammen mit dem Aufnahmekörper 2 kann die optische Achse A des Objektivs 12 zusammen mit dem Bildsensor gegenüber dem Grundkörper 1 verschoben werden. Zur Fixierung ist der Bildsensoraufnahmekörper 9 mit dem Grundkörper 1 mittels der Befestigungsschrauben 3 verbunden. Der Bildsensoraufnahmekörper 9 und der Aufnahmekörper 2 weisen hierzu eine Bohrung auf, die größer ist als der Durchmesser der Befestigungsschraube 3, wodurch der Grundkörper 1 und der Bildsensoraufnahmekörper 9 zueinander bewegbar sind. Der Bildsensoraufnahmekörper 9 weist ein Gewinde auf zur Aufnahme der Befestigungsschraube 3. Nach Erreichen der finalen Position werden die Befestigungsschrauben 3 festgezogen, wodurch das Objektiv 12 zusammen mit dem Bildsensor 10 gegenüber dem Grundkörper fixiert ist.

Weiter ist gemäß Figur 5 wie bei Figur 1 ein Objektivaufnahmekörper 14 vorgesehen, an dem das Objektiv 12 befestigt ist. Der Bildsensor 10 ist an dem Bildsensorhalter 8 befestigt. Der Bildsensorhalter 8 ist in dem Bildsensoraufnahmekörper 9 gelagert. Der Objektivaufnahmekörper 14 ist in einer Ebene senkrecht zur optischen Achse A verschiebbar an dem Bildsensoraufnahmekörper 9 angeordnet. Durch Verschieben des Objektivaufnahmekörpers 14 kann die optische Achse A des Objektivs 12 verschoben werden, bis diese den Bildsensor 10 im geometrischen Oberflächenmittelpunkt O schneidet. Zur Fixierung ist der Bildsensoraufnahmekörper 9 mit dem Objektivaufnahmekörper 14 mittels Befestigungsschrauben 15 verbunden. Entweder der Bildsensoraufnahmekörper 9 oder der Objektivaufnahmekörper 14 weist hierzu eine Bohrung auf, die größer ist als der Durchmesser der Befestigungsschraube 15, wodurch der Objektivaufnahmekörper 14 und der Bildsensoraufnahmekörper 9 zueinander bewegbar sind. Das jeweils andere Teil, also der Bildsensoraufnahmekörper 9 oder der Objektivaufnahmekörper 14, weist ein Gewinde auf zur Aufnahme der Befestigungsschraube 15. Nach Erreichen der finalen Position werden die Befestigungsschrauben 15 festgezogen, wodurch das Objektiv 12 gegenüber dem Bildsensor 10 fixiert ist.

Weiter kann wie bei Figur 1 gemäß Figur 5 das Objektiv 12 in Richtung der optischen Achse A positioniert werden, bis der Brennpunkt des Objektivs 12 direkt auf der Oberfläche des Bildsensors 10 liegt. Hierzu ist ein Objektivhalter 22 an dem Objektivaufnahmekörper 14 befestigt. Der Objektivhalter 22 kann gemäß der Erfindung auch einstückig mit dem Objektivaufnahmekörper 14 verbunden sein.

Der Objektivhalter 22 weist beispielsweise ein Innengewinde oder eine Längsführung entlang der optischen Achse A auf zur Aufnahme und bewegbaren Lagerung des Objektivs 12. Dadurch kann der Brennpunkt des Objektivs 12 direkt auf die Bildsensoroberfläche eingestellt werden. Zur Fixierung dieser Position weist der Objektivhalter 22 ein konisches Außengewinde 13 auf, welches eine Spannmutter 11 aufnimmt. Wird die Spannmutter 11 auf das konische Außengewinde 13 gedreht, wird der Objektivhalter 22 an der Stelle der Spannmutter 11 im Umfang radial gegen das Objektiv 12 gepresst, wodurch das Objektiv 12 befestigt und fixiert wird. Gegebenenfalls weist der Objektivhalter 22 im Bereich des konischen Außengewindes 13 Längsschlitze oder Aussparungen auf, um eine bessere Kraftübertragung auf das Objektiv 12 zu ermöglichen.

Die Justage, Verdrehung oder Verschiebung der einzelnen Komponenten gemäß Figur 1 bis Figur 5 kann mit Justierschrauben durchgeführt werden, die beispielsweise einen Justierkopf zur manuellen Justage aufweisen. Die Justierschrauben sind Teil eines Betriebsmittels und wirken auf die Justiervorrichtung in einem Produktionsschritt ein.

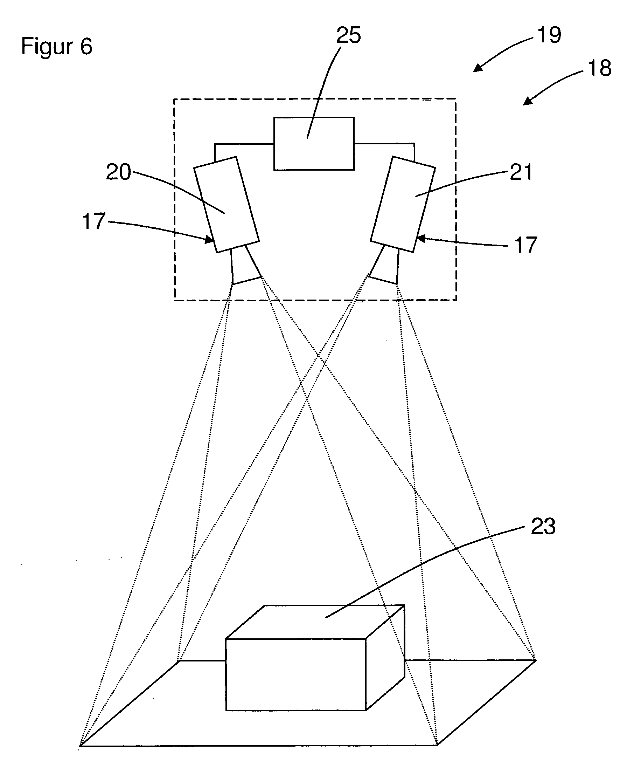

Figur 6 zeigt einen optoelektronischen Sensor 18, nämlich eine Stereokamera 19 mit jeweils einer Justagevorrichtung 17 nach den Figuren 1 bis 5 pro erster Kamera 20 und zweiter Kamera 21.

Figur 6 zeigt in einer schematischen dreidimensionalen Darstellung den Aufbau einer erfindungsgemäßen Stereokamera 19, die zur sicherheitstechnischen Überwachung eines Objekts 23 in einem Raumbereich eingesetzt ist. Zwei Kameras 20 und 21 sind in einem bekannten festen Abstand zueinander montiert und nehmen jeweils Bilder des Raumbereichs auf. In jeder Kamera 20 und 21 ist ein Bildsensor vorgesehen, üblicherweise ein matrixförmiger Aufnahmechip, der beispielsweise ein rechteckiges Pixelbild aufnimmt, beispielsweise ein CCD- oder ein CMOS-Sensor. Den Bildsensoren ist, wie bereits anhand der Figuren 1 bis 5 ausgeführt, ein Objektiv mit einer abbildenden Optik zugeordnet. Der Sichtwinkel dieser Objektive ist in Figur 6 durch gepunktete Linien dargestellt, die jeweils eine Sichtpyramide bilden.

Eine Stereoskopieverrechnungseinheit 25 ist mit den beiden Kameras 20 und 21 verbunden und empfängt so Bilddaten des Raumbereichs in Form von jeweils zwei Rohbildern. Daraus berechnet die Stereoskopieverrechnungseinheit 25 mit Hilfe einer stereoskopischen Disparitätsschätzung eine Tiefenkarte beziehungsweise ein Entfernungsbild mit dreidimensionalen Bilddaten des Raumbereichs. Ein strukturiertes Beleuchtungsmuster sorgt dabei für einen guten Kontrast und eine eindeutig zuordenbare Struktur jedes Bildelements in dem beleuchteten Raumbereich.

### Bezugszeichen:

- 1: Grundkörper
- 2: Aufnahmekörper
- 3: Schraube
- 4: Kegelscheibe
- 5: Schraube
- 6: Schalenaufnahmekörper
- 7: Druckfeder
- 8: Bildsensorhalter
- 9: Bildsensoraufnahmekörper
- 10: Bildsensor
- 11: Spannmutter
- 12: Objektiv
- 13: konisches Außengewinde
- 14: Objektivaufnahmekörper
- 15: Schraube
- 16: Schraube
- 17: Justagevorrichtung
- 18: optoelektronischer Sensor
- 19: Stereokamera
- 20: erste Kamera
- 21: zweite Kamera
- 22: Objektivhalter
- 23: Objekt
- 24: Kegelpfanne
- 25: Stereoskopieverrechnungseinheit
- A: optische Achse
- O: geometrischer Oberflächenmittelpunkt
- R: Radius
- R2: zweiter Radius
- R3: dritter Radius
- R4: vierter Radius

## Patentansprüche

1. Justagevorrichtung für einen optoelektronischen Sensor mit einem Bildsensor (10) mit einem geometrischen Oberflächenmittelpunkt (O) und einem Objektiv (12), wobei der Bildsensor (10) in einer optischen Achse (A) des Objektivs (12) angeordnet ist, so dass eine Objektabbildung des Objektivs (12) auf dem Bildsensor (10) erfasst wird,
wobei ein Objektivaufnahmekörper (14) vorgesehen ist, an dem das Objektiv (12) befestigt ist und der Objektivaufnahmekörper (14) gegenüber einem Bildsensoraufnahmekörper (9), an dem ein den Bildsensor haltender Bildsensorhalter (8) befestigt ist, senkrecht zur optischen Achse (A) des Objektivs (12) verschiebbar und fixierbar gelagert ist und wobei das Objektiv (12) in Richtung einer optischen Achse (A) positionierbar und fixierbar gelagert ist,
**dadurch gekennzeichnet,**
**dass** der Bildsensorhalter (8) um den Oberflächenmittelpunkt (O) in einem Radius (R) verschwenkbar und fixierbar an dem Bildsensoraufnahmekörper (9) gelagert ist.

2. Justagevorrichtung nach Anspruch 1, **dadurch gekennzeichnet,**
**dass** der Bildsensoraufnahmekörper (9) in einem zweiten Radius (R2) oder ein Schalenaufnahmekörper (6) in einem dritten Radius (R3) um den Oberflächenmittelpunkt (O) verschwenkbar und fixierbar an einem Aufnahmekörper (2) gelagert ist.

3. Justagevorrichtung nach Anspruch 1, **dadurch gekennzeichnet,**
**dass** ein Objektivhalter (22) vorgesehen ist, in dem das Objektiv (12) in Richtung einer optischen Achse (A) verschiebbar und fixierbar gelagert ist, wobei der Objektivhalter (22) ein konisches Außengewinde mit Längsschlitzen aufweist und eine Spannmutter (11) vorgesehen ist zum Befestigen und Fixieren des Objektivs (12) an dem Objektivhalter (22).

4. Justagevorrichtung nach einem der vorhergehenden Ansprüche, **dadurch gekennzeichnet, dass** der Aufnahmekörper (2) in einem Grundkörper (1) drehbar um die optische Achse (12) gelagert und fixierbar ist.

5. Stereokamera mit jeweils einer Justagevorrichtung (17) pro Kamera nach einem der vorhergehenden Ansprüche 1 bis 4.

## Claims

1. Adjusting device for an opto-electronic sensor having an image sensor (10) with a geometrical surface center (O) and an object lens (12), wherein the image sensor (10) is arranged in an optical axis (A) of the object lens (12) so that an object image of the object lens (12) is detected on the image sensor (10),
wherein a lens holding body (14) is provided, on which the object lens (12) is fixed and the lens holding body (14) is displaceably mounted and fixed perpendicular to the optical axis (A) of the objective (12) and relative to an image sensor receiving body (9) to which an image sensor retaining image sensor holder (8) is fastened,
and wherein the object lens (12) can be positioned and fixed in the direction of an optical axis (A),
**characterized in that** the image sensor holder (8) can be fixed and mounted on the image sensor receiving body (9) pivotably around the surface center (O) with a radius (R).

2. Adjusting device according to claim 1, **characterized in that** the image sensor receiving body (9) is mounted pivotable around the surface center (O) and fixable to a receiving body (2) at a second radius (R2), or a cup receiving body (6) is mounted pivotable and fixable to the receiving body (2) in a third radius (R3).

3. Adjusting device according to claim 1, **characterized in that** a lens holder (22) is provided in which the objective (12) can be displaceably mounted and fixed in the direction of an optical axis (A), wherein the object lens holder (22) has a conical external thread with longitudinal slits and a lock nut (11) is provided for mounting and fixing the object lens (12) to the lens holder (22).

4. Adjusting device according to one of the preceding claims, **characterized in that** the receiving body (2) is mounted in a basic body (1) rotatably around the optical axis (12) and is fixable.

5. Stereo camera with an adjusting device (17) for each camera respectively according to one of the preceding claims 1 to 4.

## Revendications

1. Dispositif d'ajustement pour un capteur optoélectronique comprenant un capteur d'image (10) avec un centre de surface géométrique (O) et un objectif (12), dans lequel le capteur d'image (10) est agencé sur un axe optique (A) de l'objectif (12), de telle manière qu'une image objet de l'objectif (12) est captée sur le capteur d'image (10),
dans lequel il est prévu un corps récepteur d'objectif (14) sur lequel est fixé l'objectif (12), et le corps récepteur d'objectif (14) est monté avec possibilité de translation et de manière à pouvoir être fixé perpendiculairement à l'axe optique (A) de l'objectif (12) par rapport à un corps récepteur de capteur d'image (9), sur lequel est fixé un support de capteur d'image (8) qui porte le capteur d'image,
et dans lequel l'objectif (12) est monté de manière à pouvoir être positionné et fixé en direction d'un axe optique (A),
**caractérisé en ce que**
le support de capteur d'image (8) est monté sur le corps récepteur de capteur d'image (9) de manière à pouvoir être pivoté et fixé autour d'un centre de surface (O) à un rayon (R).

2. Dispositif d'ajustement selon la revendication 1, **caractérisé en ce que**
le corps récepteur de capteur d'image (9) est monté sur un corps récepteur (2) de manière à pouvoir être pivoté et fixé à un second rayon (R2) autour du centre de surface (O), ou bien un corps récepteur de coque (6) est monté sur un corps récepteur (2) de manière à pouvoir être pivoté et fixé à un troisième rayon (R3) autour du centre de surface (O).

3. Dispositif d'ajustement selon la revendication 1, **caractérisé en ce que**
il est prévu un porte-objectif (22) dans lequel l'objectif (12) est monté de manière à pouvoir être déplacé et fixé en direction d'un axe optique (A), dans lequel le porte-objectif (22) comporte un pas de vis extérieur conique avec des fentes longitudinales, et il est prévu un écrou de serrage (11) pour fixer et immobiliser l'objectif (12) sur le porte-objectif (22).

4. Dispositif d'ajustement selon l'une des revendications précédentes, **caractérisé en ce que** le corps récepteur (2) est monté avec possibilité de rotation autour de l'axe optique (12) et susceptible d'être fixé dans un corps de base (1).

5. Caméra stéréo comprenant un dispositif d'ajustement respectif (17) pour chaque caméra selon l'une des revendications précédentes 1 à 4.
